(19) Europäisches Patentamt
European Patent Office
Office européen des brevets

(11) **EP 4 390 519 A1**

(12) **EUROPEAN PATENT APPLICATION**

(43) Date of publication:
**26.06.2024 Bulletin 2024/26**

(21) Application number: **22315344.6**

(22) Date of filing: **21.12.2022**

(51) International Patent Classification (IPC):
**G02C 7/02** *(2006.01)*　　　　**G02C 7/06** *(2006.01)*

(52) Cooperative Patent Classification (CPC):
**G02C 7/061; G02C 7/022;** G02C 7/027;
G02C 2202/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Essilor International
94220 Charenton-Le-Pont (FR)**

(72) Inventors:
• **FERMIGIER, Bruno
94700 MAISONS ALFORT (FR)**

• **GUILLOT, Matthieu
92130 ISSY LES MOULIENAUX (FR)**
• **ROUSSEL, Olivier
77170 BRIE COMTE ROBERT (FR)**
• **GACOIN, Eric
75020 PARIS (FR)**
• **MARIN, Gildas
75012 PARIS (FR)**

(74) Representative: **Cabinet Novitech
188 Grande rue Charles de Gaulle
94130 Nogent-sur-Marne (FR)**

(54) **PRISMATIC MICROLENSES ON PAL FOR CORRECTION CONTRIBUTION**

(57)　　A lens element adapted for a wearer and intended to be worn in front of an eye of a wearer in standard viewing conditions, the lens element comprising:
- a refraction area comprising:
- a far-distance vision zone having a first refractive power,
- a near-distance vision zone having a second refractive power,
- an intermediate-distance vision zone extending from the far-distance vision zone to the near-distance vision zone, and having a refractive power continuously varying from the first refractive power to the second refractive power,

- at least a first set of optical elements having at least a third refractive power, the optical elements being superimposed on at least one of the far distance, intermediate distance, near distance vision zone of the refraction area,

characterized in that the combination of the first set of optical elements with the refraction area on which they are superimposed provides an optical function adapted for the wearer so as to focus, in central vision, an image of an object on the retina of the wearer when said wearer gazes at the object through the at least one first set of optical elements.

Fig. 5

Processed by Luminess, 75001 PARIS (FR)

## Description

## TECHNICAL FIELD

The disclosure relates to lens elements, and in particular to multifocal lenses comprising optical elements in which peripheral aberrations are reduced.

## BACKGROUND

Multifocal refractive lenses such as progressive addition lenses have been used for many years to correct an ametropia of a wearer in a manner that is suited both to far vision and near vision. For this, the lens has optical power values that are variable between the zone for far vision and the zone for near vision.

Usually, the optical power values for these two vision zones are determined from a prescription which is prepared for the wearer. Yet, it is known that such multifocal refractive lenses exhibit, in a manner which is inherent in its principle, an unintentional astigmatism generating peripheral aberrations known as "swimming effect". When the difference between the refractive power prescribed for far vision and the refractive power prescribed for near vision is high, the peripheral aberrations are more important which may render difficult for the wearer to adapt to new lens.

The invention aims to propose a multifocal refractive lens that allows providing a high difference of optical power between the far and near vision zone without all the disadvantages usually associated with it. In other words, the invention aims to provide a lens with reduced peripheral aberrations.

Over the years, designs of multifocal refractive lenses have been made more and more complex. This increase of the complexity of the designs has rendered more difficult the processes to manufacture said lenses. Furthermore, the complexity of the designs of lenses has made lenses thicker in their periphery and less aesthetic.

The invention aims to solve the above-mentioned problems of the multifocal refractive lenses of the prior art.

## SUMMARY

To this end, the disclosure proposes a lens element adapted for a wearer and intended to be worn in front of an eye of a wearer in standard viewing conditions, the lens element comprising:

- a refraction area comprising:

  - a far-distance vision zone having a first refractive power P1,
  - a near-distance vision zone having a second refractive power P2,
  - an intermediate-distance vision zone extending from the far-distance vision zone to the near-distance vision zone, and having a refractive power Pi continuously varying from the first refractive power to the second refractive power,

- at least a first set of optical elements having at least a third refractive power, the optical elements being superimposed on at least one of the far-distance vision zone, intermediate-distance vision, and near-distance vision zone of the refraction area,

  characterized in that,
  the combination of the first set of optical elements with the refraction area on which they are superimposed provides an optical function adapted for the wearer so as to focus, in central vision, an image of an object on the retina of the wearer when said wearer gazes at the object through the first set of optical elements.

Advantageously, the combination of optical elements and refraction area allows reducing peripheral aberrations while providing good visual acuity for the wearer. Moreover, the combination of optical elements with the refraction area allows providing lens element with a reduced thickness, especially in periphery.

According to further embodiments which can be considered alone or in combination:

- the optical elements are superimposed on the far-distance vision zone, and the combination of the first refractive power P1 of the far-distance vision zone with the third refractive power of the optical elements provides an optical function focusing an image of the object located at a distance from the eye of the wearer greater than or equal to 2 m on the retina, in central vision; and/or

- the optical elements are superimposed on the near-distance vision zone, and the combination of the second refractive power P2 of the near-distance vision zone with the third refractive power of the optical elements provides an optical function focusing an image of the object located at a distance from the eye of the wearer smaller than or equal to 50 cm on the retina, in central vision; and/or

- the optical elements are superimposed on the intermediate-distance vision zone, and the combination of the refractive powers Pi of the intermediate-distance vision zone with the third refractive power of the optical elements provides an optical function focusing an image of an object located at a distance from the eye of the wearer smaller than 2.0m and greater than 50 cm on the retina, in central vision; and/or

- the absolute value of the difference between the first refractive power P1 and the second refractive power P2 is greater than or equal to 0.5 D, for example greater than or equal to 0.75 D and smaller than or equal to 2.5 D, for example to smaller than or equal to 1.5 D; and/or

- the refractive power Pi of the intermediate vision distance zone increases from the first refractive power P1 to the second refractive power P2; and/or

- the refractive power Pi of the intermediate vision distance zone decreases from the first refractive power P1 to the second refractive power P2; and/or

- the variation of the refractive power Pi between the first refractive power P1 and the second refractive power P2 is monotonous; and/or

- at least part of the optical elements of a set of optical elements are contiguous; and/or

- at least part of the optical elements of a set of optical elements are non-contiguous; and/or

- the lens element further comprises a plurality of sets of optical elements organized in horizontal bands; and/or

- the optical elements of a. set of optical elements have a common focal point, and a prism angle of each optical elements of said set of optical elements varies according to the distance between the optical element and the common focal point of said set of optical elements; and/or

- along a vertical axis passing through a geometrical center of the lens element, the refractive powers of the optical elements of each set of optical elements increase from the geometrical center toward the lower part of the lens element; and/or

- at least part, for example all, the optical elements are spherical lenslets; and/or

- at least part, for example all, the optical elements are non-spherical lenslets; and/or

- at least part, for example all, the optical elements are torical lenslets; and/or

- at least part, for example all, the optical elements are aspherical lenslets; and/or

- the region of the refraction area other than the far distance vision zone, intermediate distance vision zone, and near distance vision zone, does not contain any optical element.

## BRIEF DESCRIPTION OF THE DRAWINGS

Embodiments of the invention will now be described, by way of example only, and with reference to the following drawings in which:

- Figure 1 illustrates a schematic front view of a lens element according to an embodiment of the disclosure;

- Figure 2 illustrates a schematic profile view of a lens element/eye system according to an embodiment of the disclosure;

- Figure 3 illustrates a schematic view of a lens element/eye system according to an embodiment of the disclosure;

- Figures 4 illustrates a front view of a mounted lens element according to an embodiment of the disclosure;

- Figures 5 illustrates a front view of a mounted lens element according to an embodiment of the disclosure;

- Figures 6 illustrates a front view of a mounted lens element according to an embodiment of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present invention.

## DETAILED DESCRIPTION

In the reminder of the description, terms like « up », « bottom », « horizontal », « vertical », « above », « below », « front », « rear » or other words indicating relative position may be used. These terms are to be understood in the wearing conditions of the optical lens.

The disclosure relates to a lens element adapted for a wearer and intended to be worn in front of an eye of a wearer in standard viewing conditions.

In the context of the present invention, the term "lens element" can refer to a contact lens or an optical lens or a spectacle optical lens edged to fit a specific spectacle frame or an ophthalmic lens or a progressive multifocal addition lens, or an optical device adapted to be positioned on the ophthalmic lens. The optical device may be positioned on the front or back surface of the ophthalmic lens. The optical device may be an optical patch or film. The optical device may be adapted to be removably positioned on the ophthalmic lens for example a clip configured to be clipped on a spectacle frame comprising the ophthalmic lens.

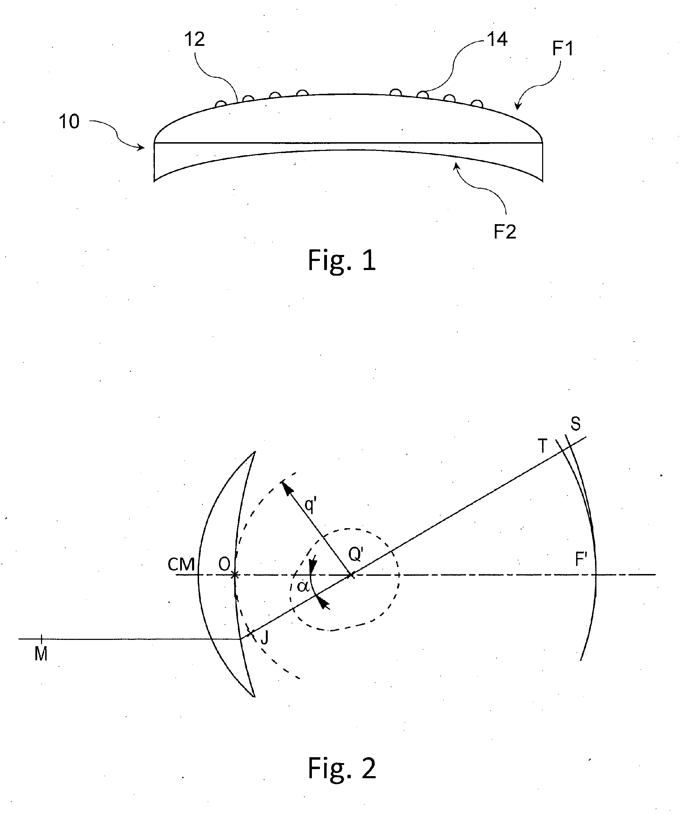

As represented in figure 1, the lens element 10 comprises at least a first surface and a second surface opposed to the first surface. For example, the first surface may comprise an object side surface F1 formed as a convex curved surface toward an object side and the second surface may comprise an eye side surface F2 formed as a concave surface having a different curvature than the curvature of the object side surface. The lens element 10 may be made of organic material, for example polycarbonate, or made of mineral material such as glass.

At least one part, preferably all, of a surface of the lens element 10 may be covered by at least one layer of coating element. The at least one layer of coating element may comprise features selected from the group consisting of anti-scratch, anti-reflection, anti-smudge, anti-dust, UV30 filtration, blue light-filtration, anti-abrasion features.

The lens element 10 is adapted for a wearer according to a prescription to restore a presbyope's ability to see clearly at all distances, but also to optimally respect all physiological visual functions such as foveal vision, extra-foveal vision, binocular vision and to minimize unwanted astigmatisms.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision. The prescription may comprise an indication that the eye of the wearer has no defect and that no refractive power is to be provided to the wearer.

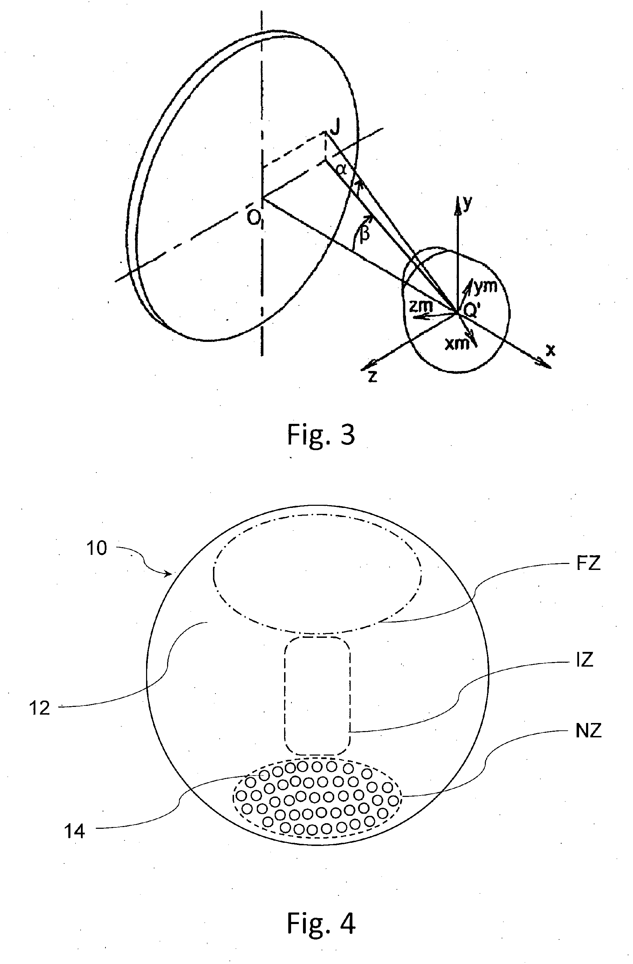

Conventionally, optical quantities, namely optical power, astigmatism and prism angle, are defined for a given lens element under the wearing conditions in which it is to be worn. Figures 2 and 3 illustrate a diagram of a lens element/eye optical system seen from the side, and show the definitions used in the rest of the disclosure based on an example of a lens element.

As illustrated in figure 2, the axis Q'F' or primary viewing direction represented by a solid line is the horizontal axis passing through the center of rotation of the eye Q' and extending in front of the wearer when looking straight ahead at an object placed at infinity. This axis intersects the front face of the lens at a point called the fitting cross CM. Conventionally, the fitting cross is marked, with permanent markings (engraving) or non-permanent markings (ink) on lenses in order to allow them to be positioned by an optician. The fitting cross is generally located 4 mm above the geometric center of the front face of the lens.

As illustrated in figure 3, a given viewing direction-illustrated by the solid line in figure, corresponds to a position of the eye rotating about Q' and to a point J on the apex sphere defined, as the sphere that cuts the rear face of the lens at the point O corresponding to the intersection by the axis Q'F' of the rear face of the lens element.

A viewing direction may also be identified, in spherical coordinates, by two angles $\alpha$ and $\beta$, in the so called Fick system. As illustrated in figures 2 and 3, the angle $\alpha$ is the angle between the Q'F' axis and the projection of the straight line Q'J on the vertical plane containing the Q'F' axis. The angle $\beta$ is the angle between the Q'F' axis and the projection of the straight line Q'J on the horizontal plane containing the Q'F' axis. A given viewing direction therefore corresponds to a point J on the apex sphere or to a coordinate pair $(\alpha, \beta)$.

In a given viewing direction, the image of a point M in the object space, located at a given object distance, is formed between two points S and T corresponding to minimum and maximum distances JS and JT (which would be the sagittal and tangential focal lengths in the case of surfaces of revolution and of a point M at infinity). In the example of the disclosure represented in figure 2, the image of a point in the object space at infinity is formed, on the Q'F' axis, at the point F'. The points S and T are coincident, which amounts to stating that the lens is locally spherical in the primary viewing direction. The distance D is the rear frontal plane of the lens.

A fixed reference frame {x,y,z} and a reference frame $\{x_m, y_m, z_m\}$ are associated with the eye in order to show clearly the rotation of the eye. The reference frame {x,y,z} has as origin the point Q' and the x-axis is the Q'F' axis-the point F' and passes through the point O. This axis is directed from the lens to the eye in correspondence with the direction of measurement of the astigmatism axis. The {y,z} plane is the vertical plane. The y-axis is vertical and directed upwards. The z-axis is horizontal, the reference frame being a direct orthonormal coordinate system. The reference frame $\{x_m, y_m, z_m\}$ associated with the eye has the point Q' as center. The $x_m$ axis is defined by the viewing direction JQ', and coincides with the {x,y,z} reference frame in the case of the primary viewing direction. Listing's law gives the relationships between the {x,y,z} and $\{x_m, y_m, z_m\}$ coordinate systems for each viewing direction-see Le Grand, Optique Physiologique, Volume 1, published by Revue d'Optique, Paris 1965.

The section of the lens may be drawn in the (O,x,y) plane. The tangent to this curve at the point O is inclined to the (O,y) axis at an angle called the pantoscopic angle. It is also possible to draw the cut of the lens in the (O,x,z) plane. The tangent to this curve at the point O is inclined to the (O,z) axis at what is called the wrap angle.

Using these elements, it is possible to define a wearer optical power and astigmatism under usual wearing conditions, in each viewing direction.

An object point M at an object distance given by the ergorama is considered for a gaze direction $(\alpha, \beta)$.

The ergorama is a function associating to each gaze direction the usual distance of an object point. Typically, in far vision following the primary gaze direction, the object point is at infinity. In near vision, following a gaze direction essentially corresponding to an angle $\alpha$ of the order of 36.6° and to an angle $\beta$ of the order of 6° in absolute value towards the nasal side, the object distance is of the order of 30 cm. For more details concerning a possible definition of an ergorama, US patent US-A-6,318,859 may be considered. This document describes an ergorama, its definition and its modeling method.

An object proximity ProxO is defined for the point M on the corresponding light ray in the object space as the inverse of the distance MJ between point M and point J of the apex sphere:

$$ProxO = \frac{1}{MJ}$$

This enables to calculate the object proximity within a thin lens element approximation for all points of the apex sphere, which is used for the determination of the ergorama. For a real lens element, the object proximity can be considered as the inverse of the distance between the object point and the front surface of the lens, on the corresponding light ray.

For the same gaze direction $(\alpha,\beta)$, the image of a point M having a given object proximity is formed between two points S and T which correspond respectively to minimal and maximal focal distances (which would be sagittal and tangential focal distances). The quantity Prox I is called image proximity of the point M:

$$ProxI = \frac{1}{2}\left(\frac{1}{JT} + \frac{1}{JS}\right)$$

By analogy with the case of a thin lens, it can therefore be defined, for a given gaze direction and for a given object proximity, i.e. for a point of the object space on the corresponding light ray, an optical power Pui as the sum of the image proximity and the object proximity, i.e.

$$Pui = ProxO + ProxI$$

With the same notations, an astigmatism Ast is defined for every gaze direction and for a given object proximity as:

$$Ast = \left|\frac{1}{JT} - \frac{1}{JS}\right|$$

This definition corresponds to the astigmatism of a ray beam created by the lens element.

Possible definitions of the optical power and the astigmatism of the lens, in standard wearing conditions, can be calculated as explained in the article by B. Bourdoncle et al., entitled "Ray tracing through progressive ophthalmic lenses", 1990 International Lens Design Conference, D.T. Moore ed., Proc. Soc. Photo. Opt. Instrum. Eng.

The prescription in ophthalmic field may comprise, in addition to the power prescription, an astigmatism prescription. Such a prescription is composed of an axis value (in degrees) and a module value (in diopters). The module value represents the difference between the maximal and minimal power in a given direction allowing to correct the visual default of a wearer. Following the convention, the axis represents the orientation of one of the two powers versus a reference axis and following a given rotation direction. TABO convention may be used. In this convention the reference axis is horizontal and the rotation direction is counterclockwise when looking at the wearer. A 45° axis corresponds to an axis orientated obliquely linking, when looking at the wearer, the upper right quadrant to the lower left quadrant. Such an astigmatism prescription is measured for the wearer in far vision. The term 'astigmatism' is used to refer to the couple (module, axis). That term is sometimes used to simply designate the module. The skilled person easily understands what it refers to depending on the context. The skilled person is also aware that the power/astigmatism prescription for a wearer is commonly described with the terms sphere, cylinder and axis.

The prescribed far vision mean power value (PFV) is defined as the power prescribed plus half of the module of prescribed astigmatism.

The resulting astigmatism is defined as the difference between a prescribed astigmatism and the astigmatism generated by the working lens in the reference frame associated with the eye, and for each direction of glance. Resulting astigmatism may also be called residual astigmatism.

The wearing conditions are to be understood as the position of the lens element with relation to the eye of a wearer, for example defined by a pantoscopic angle, a wrap angle, a Cornea to lens distance, and eventually any of a Pupil-cornea distance, a center of rotation of the eye (CRE) to pupil distance, a CRE to lens distance and.

The Cornea to lens distance is the distance along the visual axis of the eye in the primary position (usually taken to be the horizontal) between the cornea and the back surface of the lens; for example comprised between 8 and 16 mm, preferably 10 and 14 mm, more preferably equal to 12mm.

The Pupil-cornea distance is the distance along the visual axis of the eye between its pupil and cornea; usually comprised between 1 and 4 mm, for example equal to 2mm.

The CRE to pupil distance is the distance along the visual axis of the eye between its center of rotation (CRE) and cornea; for example comprised between 10 and 15 mm, preferably 11 and 12 mm, more preferably equal to 11.5mm.

The CRE to lens Q'O distance is the distance along the visual axis of the eye in the primary position (usually taken to be the horizontal) between the CRE of the eye and the back surface of the lens, for example comprised between 20 and 30 mm, preferably 22.5 and 28 mm, more preferably equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example comprised between -25° and +5°, preferably -12° and 0°, more preferably between -10° and -6°, for example equal to -8°, preferably equal to 0°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example comprised between -10° and +25°, preferably 0° and 10°, more preferably between 0° and +5°, for example equal to 0°.

An example of standard wearing condition may be defined by a pantoscopic angle of - 8°, a Cornea to lens distance of 12 mm, a Pupil-cornea distance of 2 mm, a CRE to pupil distance of 11.5 mm, a CRE to lens distance of 25.5 mm and a wrap angle of 0°.

Another example of standard wearing condition more adapted for younger wearers may be defined by a pantoscopic angle of 0°, a Cornea to lens distance of 12 mm, a Pupil-cornea distance of 2 mm, a CRE to pupil distance of 11.5 mm, a CRE to lens distance of 25.5 mm and a wrap angle of 0°.

As illustrated in figures 1 and 4 to 6, the lens element 10 comprises a refraction area 12. The refractive area comprises a far distance vision zone FZ, a near distance vision zone NZ, and an intermediate distance vision zone IZ.

The far distance vision zone FZ is the zone of the lens element that surrounds the far vision point FV, and within which the optical characteristics of optical power, of astigmatism and of prism, of the lens element are substantially identical to those at the far vision point. When the wearer is wearing the lens element in standard wearing conditions and looks through the far distance vision zone FZ, the image of an object located at infinity will form a clear image on its retina. Usually, the far distance vision zone is located in the upper part of the lens element. The far distance vision zone corresponds to the intersection of the lens and a far vision cone. The far vision cone is a right circular cone. The axis of the far vision cone passes through the center of rotation of the eye and the far vision point of the lens. The aperture W1 of the far vision cone is greater than or equal to +/- 10°, preferably +/- 30° horizontally and 20° vertically.

The far vision point is a reference point on the surface of the lens through which the sight of the wearer passes when said wearer looks at an object located at infinity and where the optical function corresponds to the wearer's prescription for far vision. For example, the far vision point may correspond to the fitting the cross CM of the lens element or to a viewing elevation of 4° or 8° above the fitting cross.

The refraction area 12 has a first refractive power P1, for example based on a prescription of the wearer for far vision, in the far distance vision zone FZ. For example, the first refractive power P1 may be adapted to focus an image of an object located at a distance greater than 2 m from the lens element on the eye of the wearer.

The near distance vision zone NZ is the zone of the lens element that surrounds the near vision point NV, and within which the optical characteristics of optical power, of astigmatism and of prism, of the lens element are substantially identical to those at the near vision point. When the wearer is wearing the lens element in standard wearing conditions and looks through the near distance vision zone NZ, the image of an object located close to the wearer, at reading distance, will form a clear image on its retina. Usually, the near distance vision zone is located in the lower part of the lens element. The near distance vision zone corresponds to the intersection of the lens and a near vision cone. The near vision cone is a right circular cone. The axis of the near vision cone passes through the center of rotation of the eye and the near vision point of the lens. The aperture W2 of the near vision cone is greater than or equal to 5°, preferably 10°.

The near vision point is a reference point on the surface of the lens element through which the sight of the wearer passes when said wearer looks at an object located at closely at less than 50 cm and where the optical function corresponds to the wearer's prescription for near vision. For example, the near vision point may correspond to a lowering of the viewing direction by 36.6° below the fitting cross CM. The near vision point NV may have the coordinates ($\alpha N = 6°$; $\beta N = 36.6°$) in the predefined spherical coordinate system.

The refraction area 12 has a second refractive power P2, for example based on a prescription of the wearer for near vision, in the near distance vision zone NZ. For example, the second refractive power P2 may be adapted to focus on the retina of the wearer an image of an object located at a distance smaller than or equal to 0,5 m from the eye of the wearer.

The intermediate distance vision zone IZ is the zone of the lens element that surrounds the near vision point IV, and within which the optical characteristics of optical power, of astigmatism and of prism, of the lens element are substantially identical to those at the intermediate vision point. When the wearer is wearing the lens element in standard wearing conditions and looks through the intermediate vision distance zone IZ, the image of an object located between infinity and ready distance from the wearer, will form a clear image on its retina. The intermediate distance zone IZ extends from the far distance vision zone FZ and the near distance vision zone NZ. The intermediate distance vision zone corresponds to the intersection of the lens and an intermediate vision cone. The intermediate vision cone is a right circular cone. The axis of the intermediate vision cone passes through the center of rotation of the eye and the intermediate vision point of the lens. The aperture W3 of the intermediate vision cone is greater than or equal to +/- 1° horizontally, preferably 5°.

The intermediate vision point is a reference point on the surface of the lens element through which the sight of the wearer passes when said wearer looks at an object located at a distance greater than 50 cm and smaller than 2 m, and where the optical function corresponds to the wearer's prescription for intermediate vision.

The refraction area 12 has a refractive power Pi that continuously vary between the first refractive power P 1 and the second refractive power P2. Preferably, the variation of refractive power Pi is monotonous. For example, the refractive power Pi may be adapted to focus on the retina of the wearer an image of an object located at a distance greater than 0,5 m and smaller than 2 m from the eye of the wearer,

The optical power Pi of the intermediate distance vision zone IZ may increase, for example progressively, from the first refractive power P1 towards the second refractive P2. Alternatively, the optical power Pi of the intermediate distance vision zone IZ may increase, for example progressively, from the first refractive power P1 towards the second refractive P2. The variation of the optical power Pi between the first refractive power P1 and the second refractive power P2 may be strictly monotonous.

The absolute value of the difference between the first optical power P1 and the second optical power P2 is greater than or equal to 0.5 D, preferably greater than or equal to 0.75 D, for example greater than or equal to 1.0 D and smaller than or equal to 3.0 D, preferably smaller than or equal to 2,5D, for example smaller than or equal to 1.5 D.

As illustrated in figures 1 and 4 to 6, the lens element 10 comprises at least a first set of optical elements 14.

The set of optical elements 14 is superimposed on at least one of the far distance vision zone FZ and/or the intermediate distance vision zone IZ and/or the near distance vision zone NZ. For example, the set of optical elements is superimposed in the intermediate distance vision and the near distance vision. In the sense of the disclosure, the expression "superimposed" should be understood as located on the front surface of the lens element F1 and/or on the back surface of the lens element F2 and/or between the front and back surfaces of the lens elements.

Preferably, the regions of the refractive areas other than the far distance vision zone FV, the intermediate distance vision zone IV, and the near distance vision zone NZ do not comprise optical elements.

The optical elements 14 have at least a third refractive power. For example, all the optical elements of the first set of optical elements have the same refractive power. Alternatively, the set of optical elements may be formed by optical elements having different optical powers.

The optical elements 14 of a set of optical elements may all have a common focal point. In other words, light emitted from a point object in space passing through each optical elements of a same set of optical elements will form a common image point. In the sense of the invention, the expression "common focal point" should be understood as a 3D sphere volume, whose geometrical center correspond to the average focal point of the optical elements, and having a radius comprised between 0.01 mm and 0.5 mm,

The optical elements of a set of optical elements may all have a common prism. Alternatively, the prism angle value and orientation of each optical element of a set of optical elements varies according to the distance between said optical element and the common focal point of the set of optical elements and the relative position to said common focal point. The prism angle of the optical elements allows deviating light towards the common focal point and thus allows compensating the variation induced by the shape of the periphery of the lens element.

Similarly, the optical elements of a set of optical elements may all have a common size and/or a common shape. Alternatively, the size and/or shape of each optical element of a set of optical elements varies according to the distance between said optical element and the common focal point of the set of optical elements and to the relative position to said common focal point.

The optical elements of a set of optical elements may all have a common refractive power. Alternatively, the refractive power of the optical elements of a set may vary between said optical elements. For example, the refractive power of the optical elements may decrease with the distance from the common focal point of the set of optical elements.

The combination of the refractive power of the optical elements of the at least first set of optical elements with the refractive power of the at least one zone of the lens element on which they are superimposed provides to the wearer an optical function adapted for the wearer so as to focus, in central vision, an image of an object on the retina of the wearer when said wearer gazes at the object through the first set of optical elements.

Advantageously, the use of optical elements combined with the refraction area allows reducing peripheral aberrations and associated "swimming effect" of multifocal lenses. In addition, the combination of microlenses and the refractive area allows providing a specific optical function with a reduced thickness of the lens element.

The optical elements 14 may be superimposed on the far-distance vision zone FZ. In such case, the combination of the first optical power P1 of the far-distance vision zone with the third optical power of the optical elements provides an optical function focusing on the retina of the wearer, an image of the object located at a distance from the eye of the wearer greater than or equal to 2 m, in central vision when the wearer looks at the object through said optical elements.

The optical elements 14 may be superimposed on the near-distance vision zone NZ. In such case, the combination of the first optical power P2 of the near-distance vision zone with the third optical power of the optical elements provides an optical function focusing on the retina of the wearer, an image of the object located at a distance from the eye of the wearer smaller than or equal to 0.5 m, in central vision when the wearer looks at the object through said optical elements.

The optical elements 14 may be superimposed on the intermediate-distance vision zone IZ. In such case, the combination of the optical powers Pi of the intermediate-distance vision zone with the third optical power of the optical elements provides an optical function focusing on the retina of the wearer, an image of the object located at a distance from the eye of the wearer greater than 0.5 m and smaller than 2.0 m, in central vision when the wearer looks at the object through said optical elements.

While the following examples of lens element are described to illustrate different embodiments of the disclosure, it should be noted that the disclosure is not limited to the following examples. In particular, the skilled person being an optician or a lens designer reading the present description would be able to consider numerous other embodiments of the disclosure covering all the possible combinations of features.

Example 1: The lens element 10 comprises a single set of optical elements 14, all having the same third refractive power of 1.0 D. The first refractive power P1 of the far distance vision zone FZ is equal to 0.75 D and the second refractive power P2 of the near distance vision zone NZ is equal to 1.5 D. The set of optical elements 14 is superimposed on the near distance vision zone only. The combination of the second refractive power P2 and the third refractive power of the optical elements provides an optical function of 2.5 D when the wearer wearing the lens element in standard wearing conditions looks through the optical elements in the near distance vision zone NZ.

Example 2: The lens element 10 comprises a single set of optical elements 14, all having the same third refractive power of 1.0 D. The first refractive power P1 of the far distance vision zone FZ is equal to 0.0 D and the second refractive power P2 of the near distance vision zone NZ is equal to 1.0 D. The set of optical elements 14 is superimposed on the near distance vision zone NZ and the intermediate distance zone IZ. The combination of the refractive power Pi and the refractive power of the optical elements provides an optical function varying between 1.0 D and 2.0 D when the wearer wearing the lens element in standard wearing conditions looks through the optical elements in the intermediated distance vision zone IZ. The combination of the second refractive power P2 and the third refractive power of the optical elements provides an optical function of 2.0 D in the near distance vision zone NZ.

Example 3: The lens element 10 comprises a single set of optical elements 14, all having the same refractive power of 1.0 D. The first refractive power P1 of the far distance vision zone FZ is equal to 0.25 D and the second refractive power P2 of the near distance vision zone NZ is equal to 0.75 D. The set of optical elements 14 is superimposed on the near distance vision zone NZ, the intermediate distance zone IZ, and the far distance vision zone FZ. The combination of the first refractive power P1 and the third refractive power of the optical elements provides an optical function of 1.25 D when the wearer wearing the lens element in standard wearing conditions looks through the optical elements in the far distance vision zone FZ. The combination of the refractive power Pi and the refractive power of the optical elements provides an optical function varying between 1.0 D and 1.75 D for the intermediated distance vision zone IZ. The combination of the second refractive power P2 and the third refractive power of the optical elements provides an optical function of 1.75 D in the near distance vision zone NZ.

Example 4: The lens element 10 comprises three sets of optical elements 14, the optical elements of the first set having a refractive power of 0.5 D, the optical elements of the second set having a refractive power of 1.0 D, and the optical elements of the third set having a refractive power of 1.5 D. The first refractive power P1 of the far distance vision zone FZ is equal to 0.5 D and the second refractive power P2 of the near distance vision zone NZ is equal to 1.5 D. The first set of optical elements 14 is superimposed on the far distance vision zone FZ. The second set of optical elements is superimposed on the intermediate distance zone IZ. The third set of optical elements is superimposed on the far distance vision zone FZ. The combination of the first refractive power P1 and the refractive power of the optical elements of the first set provides an optical function of 1 D when the wearer wearing the lens element in standard wearing conditions looks through the optical elements in the far distance vision zone FZ. The combination of the refractive power Pi and the refractive power of the optical elements of the second set provides an optical function varying between 1.5 D and 3 D for the intermediated distance vision zone IZ. The combination of the second refractive power P2 and the refractive power of the optical elements of the third set provides an optical function of 3 D in the near distance vision zone NZ.

The lens element 10 may comprise a plurality of sets of optical elements 14, for example 3 sets, preferably 5 sets, more preferably 7 sets.

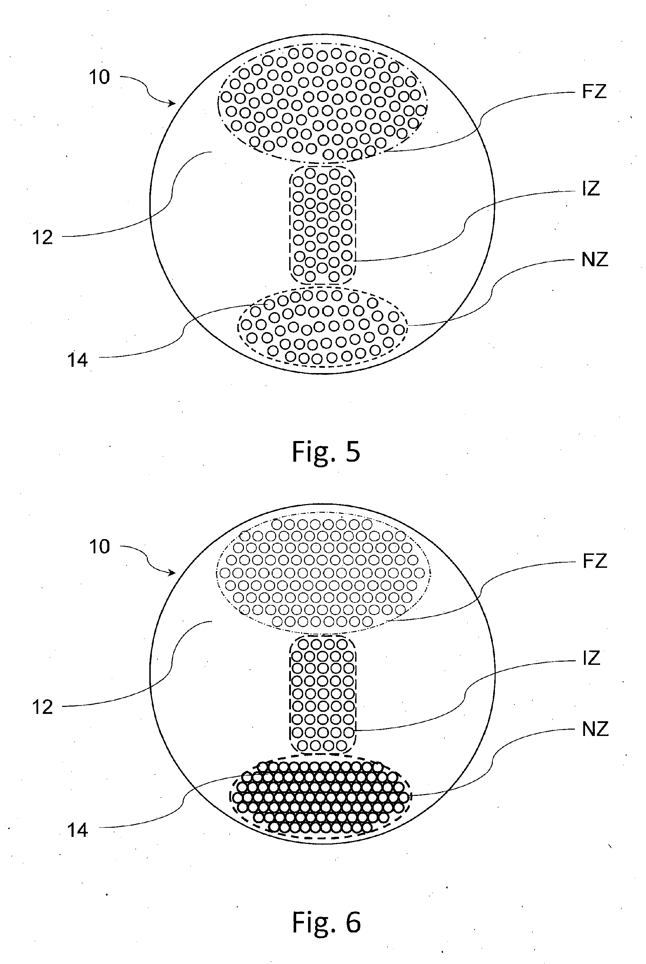

As illustrated in figure 6, each of these sets of optical elements superimposed on the refraction area 12 of the lens element may be organized in horizontal bands.

The different horizontal bands formed by the sets of optical elements may partially overlap. In other words, two distinct set of optical elements may cover a same horizontal area of the lens elements.

Alternatively, the horizontal bands of optical elements may be organized consecutively so that each horizontal band is adjacent to another horizontal band of a different set of optical elements. The horizontal bands may be organized along a vertical axis and regularly spaced from each other. The vertical axis cuts the horizontal bands of optical elements orthogonally and may pass through the geometrical center of the lens element.

Following the direction of this vertical axis, the refractive powers of the optical elements of each set of optical elements may increase towards the lower edge of the lens element. In other words, the sets of optical elements may be organized so as to form a gradient of optical power increasing toward the lower limit of the lens element.

The ratio between the sum of areas of the optical elements 14 of the at least one set of optical elements and the area of the at least one of the far distance vision zone, the intermediate distance vision zone, and the near distance vision zone on which they are superimposed is comprised between 20% and 100%.

As represented in figure 5, at least part, for example all, of the optical elements 14 of the at least one set of optical elements may be non-contiguous.

As represented in figure 6, at least part, preferably all, of the optical elements 14 of the at least one set of optical elements may be contiguous.

In the sense of the disclosure, two optical elements located on a surface of the lens element are contiguous if there is a path supported by said surface that links the two optical elements and if along said path one does not reach the basis surface of the lens element on which the optical elements are superimposed.

When the surface on which the at least two optical elements are superimposed is spherical, the basis surface corresponds to said spherical surface. In other words, two optical elements superimposed on a spherical surface are contiguous if there is a path supported by said spherical surface and linking them and if along said path one may not reach the spherical surface.

When the surface on which the at least two optical elements are superimposed is non-spherical, the basis surface corresponds to the local spherical surface that best fit said non-spherical surface. In other words, two optical elements superimposed on a non-spherical surface are contiguous if there is a path supported by said non-spherical surface and linking them and if along said path one may not reach the spherical surface that best fit the non-spherical surface.

At least part, for example more than 50%, preferably all, of the optical elements 14 of the at least one set of optical elements may be lenslets having a contour shape being inscribable in a circle having a diameter greater than or equal to 0.2 mm, for example greater than or equal to 0.4 mm, for example greater than or equal to 0.6 mm, for example greater than or equal to 0.8 mm and smaller than or equal to 3.0 mm, for example smaller than or equal to 1.0 mm.

At least part, for example more than 50%, preferably all, of the optical elements 14 of the at least one set of optical elements may be spherical lenslets.

At least one, for example more than 50%, preferably all, of the optical elements 14 of the at least one set of optical elements may be non-spherical lenslets. In the sense of the disclosure, the term "non-spherical" should be understood as not having the same curvature and refractive power over the surface. It should be opposed to spherical lenslets which have a constant refractive power over their surface.

At least one, for example more than 50%, preferably all, of the optical elements 14 may comprise a cylindrical power. At least one, for example more than 50%, preferably all, of the optical elements 14 may be torical lenslets.

At least one, for example more than 50%, preferably all, of the optical elements may be a multifocal refractive lenslet. In the sense of the disclosure, "multifocal refractive lenslet" includes bifocals (with two focal powers), trifocals (with three focal powers), progressive addition lenses, with continuously varying focal power, for example aspherical surface lenses.

At least one, for example more than 50%, preferably all, of the optical elements 14 of the at least one set of optical elements may be aspherical lenslets. In the sense of the invention, aspherical lenslets have a continuous power evolution over their surface, for example from a geometrical or optical center to the periphery of the microlens, and a smaller, in absolute value, refractive power in the periphery than in their center.

The absolute value of the difference between the refractive power measured in the center and the refractive power measured in the periphery of an aspherical lenslet may be comprised between 0.1D and 5D. The center of the microlens may be defined by a circular area centered on the geometrical center of the microlens and having a diameter comprised between 0.1 mm and 0.5 mm, preferably equal to 0.2 mm. The periphery of the microlens may be defined by an annular zone centered on the geometrical center of the microlens and having an inner diameter comprised between 0.5 mm and 0.7 mm and an outer diameter comprised between 0.70 mm and 0.80 mm. For example, an aspherical lenslet may have a refractive power measured in their geometrical center comprised between 2.0D and 7.0D in absolute value, and an optical power measured in their periphery comprised between 1.5D and 6.0D in absolute value.

At least one, for example more than 50%, preferably all, of the optical elements 14 may comprise an aspherical surface, with or without a rotational symmetry.

At least one, for example more than 50%, preferably all, of the optical elements 14 may comprise a toric surface. A toric surface is a surface of revolution that can be created by rotating a circle or arc about an axis of revolution (eventually positioned at infinity) that does not pass through its center of curvature. Toric surface lenses have two different radial profiles at right angles to each other, therefore producing two different focal powers. Toric and spheric surface components of toric lenses produce an astigmatic light beam, as opposed to a single point focus.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. . A lens element adapted for a wearer and intended to be worn in front of an eye of a wearer in standard viewing conditions, the lens element comprising:

   - a refraction area comprising:

     - a far-distance vision zone (FZ) having a first refractive power P1,
     - a near-distance vision zone (NZ) having a second refractive power P2,
     - an intermediate-distance vision zone (IZ) extending from the far-distance vision zone to the near-distance vision zone, and having a refractive power Pi continuously varying from the first refractive power P1 to the second refractive power P2,

   - at least a first set of optical elements having at least a third refractive power, the optical elements being superimposed on at least one of the far distance, intermediate distance, near distance vision zone of the refraction area,

   **characterized in that**
   the combination of the first set of optical elements with the refraction area on which they are superimposed provides an optical function adapted for the wearer so as to focus, in central vision, an image of an object on the retina of the wearer when said wearer gazes at the object through the at least one first set of optical elements.

2. . The lens element according to claim 1, wherein optical elements are superimposed on the far-distance vision zone (FZ), and the combination of the first refractive power P1 of the far-distance vision zone with the third refractive power of the optical elements provides an optical function focusing an image of the object located at a distance from the eye of the wearer greater than or equal to 2 m on the retina, in central vision.

3. . The lens element according to any of claims 1 or 2, wherein optical elements are superimposed on the near-distance vision zone (NZ), and the combination of the second refractive power P2 of the near-distance vision zone with the third refractive power of the optical elements provides an optical function focusing an image of the object located at a distance from the eye of the wearer smaller than or equal to 50 cm on the retina, in central vision.

4. . The lens element according to any of claims 1 to 3, wherein optical elements are superimposed on the intermediate-distance vision zone (IZ), and the combination of the refractive power Pi of the intermediate-distance vision zone with the third refractive power of the optical elements provides an optical function focusing an image of an object located at a distance from the eye of the wearer smaller than 2.0 m and greater than 50 cm on the retina, in central vision.

5. . The lens element according to any of the preceding claims, wherein the absolute value of the difference between the first refractive power P1 and the second refractive power P2 is greater than or equal to 0.5 D, for example greater than equal to 0.75 D and smaller than or equal to 2.5 D, for example to smaller than or equal to 1.5 D.

6. . The lens element according to any of the preceding claims, wherein the refractive power Pi of the intermediate vision distance region increases from the first refractive power P1 to the second refractive power P2.

7. . The lens element according to any of the preceding claims, wherein the refractive power Pi of the intermediate vision distance region decreases from the first refractive power P1 to the second refractive power P2.

8. . The lens element according to any of the preceding claims, wherein at least part of the optical elements 14 of a set of optical elements are contiguous.

9. . The lens element according to any of the preceding claims, wherein at least part of the optical elements 14 of a set of optical elements are non-contiguous.

10. . The lens element according to any of the preceding claims, further comprising a plurality of sets of optical elements 14 organized in horizontal bands.

11. . The lens element according to any of the preceding claims, wherein the optical elements 14 of a set of optical elements have a common focal point, and a prism angle of each optical elements of said set of optical elements varies according to the distance between the optical element and the common focal point of said set of optical elements.

12. . The lens element according to any of claims 10 or 11, wherein along a vertical axis passing through a geometrical center of the lens element, the refractive powers of the optical elements of each set of optical elements increase from the geometrical center toward the lower part of the lens element.

13. . The lens element according to any of claims 1 to 11, wherein at least part of, for example all, the optical elements 14 are spherical lenslets.

14. . The lens element according to any of claims 1 to 11, wherein at least part of, for example all, the optical elements 14 are aspherical lenslets.

15. . The lens element according to any of the preceding claims, wherein the region of the refraction area other than the far distance vision zone (FZ), intermediate distance vision zone (IZ), and near distance vision zone (NZ), does not contain any optical element.

## Fig. 1

## Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 22 31 5344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/069232 A1 (REOPIA OPTICS LLC [US]) 2 April 2020 (2020-04-02) * paragraphs [0088] - [00103]; figures 5a, 5b * | 1-7,9, 14,15 | INV. G02C7/02 G02C7/06 |
| X | EP 4 006 626 A1 (ZEISS CARL VISION INT GMBH [DE]) 1 June 2022 (2022-06-01) * paragraphs [0100], [0146] - [0154]; figures 9, 10 * | 1-8,10, 12,15 | |
| X | EP 4 030 221 A2 (TOKAI OPTICAL CO LTD [JP]) 20 July 2022 (2022-07-20) * paragraphs [0072], [0074]; figures 1, 4 * | 1-7,9,15 | |
| A | WO 2021/229889 A1 (HOYA LENS THAILAND LTD [TH]; QI HUA [JP]) 18 November 2021 (2021-11-18) * the whole document * | 11 | |
| A | US 2019/324293 A1 (MARSHALL MICHAEL [US] ET AL) 24 October 2019 (2019-10-24) * the whole document * | 1-15 | TECHNICAL FIELDS SEARCHED (IPC) G02C |

The present search report has been drawn up for all claims

| Place of search | Date of completion of the search | Examiner |
|---|---|---|
| Munich | 26 May 2023 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 31 5344

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2023

| Patent document cited in search report | | Publication date | Patent family member(s) | | Publication date |
|---|---|---|---|---|---|
| WO 2020069232 | A1 | 02-04-2020 | CN | 112673302 A | 16-04-2021 |
| | | | WO | 2020069232 A1 | 02-04-2020 |
| EP 4006626 | A1 | 01-06-2022 | EP | 4006626 A1 | 01-06-2022 |
| | | | WO | 2022112533 A2 | 02-06-2022 |
| EP 4030221 | A2 | 20-07-2022 | CN | 114114711 A | 01-03-2022 |
| | | | EP | 4030221 A2 | 20-07-2022 |
| | | | JP | 2022100249 A | 05-07-2022 |
| | | | US | 2022197058 A1 | 23-06-2022 |
| WO 2021229889 | A1 | 18-11-2021 | CN | 115485610 A | 16-12-2022 |
| | | | EP | 4152081 A1 | 22-03-2023 |
| | | | JP | WO2021229889 A1 | 18-11-2021 |
| | | | KR | 20230003018 A | 05-01-2023 |
| | | | TW | 202142927 A | 16-11-2021 |
| | | | WO | 2021229889 A1 | 18-11-2021 |
| US 2019324293 | A1 | 24-10-2019 | BR | 112017021858 A2 | 10-07-2018 |
| | | | BR | 122020016722 B1 | 11-04-2023 |
| | | | CA | 2981888 A1 | 20-10-2016 |
| | | | CL | 2017002559 A1 | 18-05-2018 |
| | | | CN | 107708614 A | 16-02-2018 |
| | | | CN | 111221147 A | 02-06-2020 |
| | | | CO | 2017010401 A2 | 16-01-2018 |
| | | | DE | 202016009004 U1 | 11-06-2021 |
| | | | DE | 202016009005 U1 | 11-06-2021 |
| | | | DE | 202016009006 U1 | 11-06-2021 |
| | | | DE | 202016009007 U1 | 11-06-2021 |
| | | | EP | 3283008 A1 | 21-02-2018 |
| | | | EP | 4180007 A1 | 17-05-2023 |
| | | | KR | 20170138479 A | 15-12-2017 |
| | | | PE | 20171775 A1 | 21-12-2017 |
| | | | US | 2016306192 A1 | 20-10-2016 |
| | | | US | 2019324293 A1 | 24-10-2019 |
| | | | US | 2021389608 A1 | 16-12-2021 |
| | | | WO | 2016168746 A1 | 20-10-2016 |

EPO FORM P0459

For more details about this annex : see Official Journal of the European Patent Office, No. 12/82

EP 4 390 519 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6318859 A

**Non-patent literature cited in the description**

- **LE GRAND.** Optique Physiologique. Revue d'Optique, 1965, vol. 1

- Ray tracing through progressive ophthalmic lenses. **B. BOURDONCLE et al.** International Lens Design Conference. 1990